# EUROPEAN PATENT APPLICATION

(11) **EP 4 813 960 A1**
(43) Date of publication of application: **30.09.2026**
(21) Application number: 24894136.1
(22) Date of filing: 19.11.2024
(51) Int. Cl.: C04B 38/00, B01D 39/20, B01D 46/00, C04B 35/577

(54) **SILICON-CARBIDE-BASED CERAMIC HONEYCOMB STRUCTURE**

(30) Priority: 22.11.2023 JP 2023198437
(71) Applicant: Mirai Casting America, Inc., Farmington Hills, MI 48335 (US)
(72) Inventor: SHIMIZU, Kenichiro, Miyako-gun, Fukuoka 800-0393 (JP); ISHIZAWA, Toshitaka, Tokyo 135-0061 (JP)
(74) Representative: Diehl & Partner
(86) International application number: PCT/JP2024/040924
(87) International publication number: WO 2025/110145

(57) **Abstract**

A silicon carbide-based ceramic honeycomb structure having a plurality of flow paths defined by porous cell walls extending from a first end surface to a second end surface and a coefficient of thermal expansion (between room temperature and 800°C) of 49 × 10⁻⁷/°C or less, wherein the cell walls comprise aggregates made of silicon carbide, a SiO₂ layer existing on a surface of the aggregates, and a binder phase including a cordierite phase and a spinel phase, wherein there are portions in which the aggregates are bonded together by the SiO₂ layer without interposing the binder phase, and portions in which the aggregates are bonded together by the SiO₂ layer via the binder phase, and wherein the SiO₂ layer has an amorphous SiO₂ phase and a crystalline SiO₂ phase.

## Description

### FIELD OF THE INVENTION

The present invention relates to a silicon carbide-based ceramic honeycomb structure used for a ceramic honeycomb filter for purifying exhaust gas discharged from an internal combustion engine such as a diesel engine by removing particulate matter (hereinafter simply referred to as "PM") and the like from it.

### BACKGROUND OF THE INVENTION

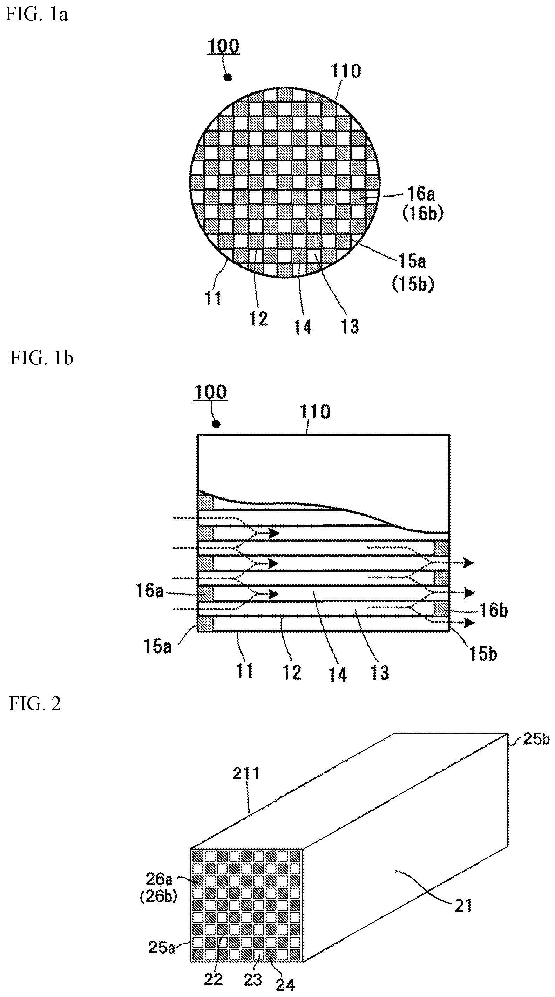

If NOx and PM contained in exhaust gas of a diesel engine are released into the air, they may adversely affect the human body and the environment. Therefore, it has been conventionally practiced to mount a honeycomb structure carrying a NOx catalyst and a ceramic honeycomb filter for capturing PM in the middle of an exhaust pipe of a diesel engine as an exhaust device. Fig. 1(a) and Fig. 1(b) show an example of a ceramic honeycomb filter for capturing PM in exhaust gas to purify the exhaust gas. A ceramic honeycomb filter 100 is constituted by a ceramic honeycomb structure 110 comprising porous cell walls 12 defining a plurality of flow paths 13, 14 and an outer peripheral wall 11, and inlet-side plugs 16a and outlet-side plugs 16b sealing an exhaust-gas-inlet-side end surface 15a and an exhaust-gas-outlet-side end surface 15b of the flow paths 13, 14 alternately in a checkerboard pattern. As shown by dotted arrows in Fig. 1(b), exhaust gas flows into the outlet-side-plugged flow paths 13 open at the exhaust-gas-inlet-side end surface 15a, passes through communicating pores existing on the surface and inside of the cell walls 12, goes through inlet-side-plugged flow paths 14 open at the outlet-side end surface 15b, and is discharged from the outlet-side end surface 15b. While the exhaust gas passes through the communicating pores existing on the surface and inside of the cell walls 12, PM in the exhaust gas is captured, so that the exhaust gas is purified. When the captured PM reaches a predetermined accumulated amount, it is burned, and the ceramic honeycomb filter 100 is regenerated. The usage environment of such a ceramic honeycomb filter 100 is becoming increasingly severe, and refractory particles such as silicon carbide (SiC) particles excellent in thermal shock resistance have been used as a constituent material of the ceramic honeycomb structure 110.

As a method for producing a honeycomb structure having a high porosity and a high thermal conductivity at a relatively low sintering temperature at low cost, Patent Document 1 discloses a method for producing a honeycomb structure, comprising molding a moldable material obtained by kneading silicon carbide particles and metallic silicon particles with an organic binder into a honeycomb shape, calcining the obtained green body to remove the organic binder in the green body, and then sintering it. Patent Document 1 describes that it is preferable to (a) calcine the honeycomb green body by maintaining a predetermined temperature of about 150 to 700°C or raising the temperature at a rate of 50°C/hr or less in a predetermined temperature range, and (b) in the sintering in a temperature range of 1400 to 1600°C, use a non-oxidizing atmosphere such as N₂ or Ar at a temperature equal to or higher than an oxidation onset temperature. However, there has been a problem that expensive equipment is required for sintering in a non-oxidizing atmosphere, thereby increasing the production cost.

Patent Document 2 discloses a method for producing a porous material composed of aggregate particles comprising silicon carbide particles or silicon nitride particles having an oxide film containing cristobalite formed on a surface thereof, cordierite, and a binder bonding the aggregate particles in a state where pores are formed, by molding a mixture comprising an aggregate raw material containing silicon carbide particles or silicon nitride particles, a binder raw material containing 35 to 45% by mass of talc, 45 to 60% by mass of aluminum oxide and 0 to 10% by mass of silicon dioxide, and a pore-forming material, calcining the obtained green body in an air atmosphere at 200 to 600°C, sintering the obtained calcined body in a non-oxidizing atmosphere at 1300°C or higher, and oxidizing the obtained sintered body in an oxidizing atmosphere at 1100°C or higher.

Patent Document 3 discloses a method for producing a porous material in which silicon carbide aggregates are bonded together by oxide ceramics with a plurality of pores kept, and an oxygen-containing phase is formed on the surface of the aggregates (including an interface with the binder), by molding a kneaded material comprising an aggregate powder made of silicon carbide, a binder raw material containing a cordierite-forming raw material, and an organic binder, calcining the obtained green body in an oxygen-containing atmosphere to remove the organic binder, sintering it in a temperature range of 1370 to 1450°C to generate a porous sintered body in which the aggregate powder is bonded together by oxide ceramics, and heat-treating the obtained sintered body in an oxygen-containing atmosphere in a temperature range of 1000 to 1400°C.

However, in the methods for producing a porous material described in Patent Documents 2 and 3, sintering is performed in an inert atmosphere after calcination, and then heat treatment is performed in an oxidizing atmosphere. Thus, these methods require not only expensive inert atmospheres, but also expensive equipment to perform sintering in the inert atmospheres, as well as oxidation furnaces, which has led to high costs.

In view of such circumstances, the present applicant has previously disclosed a method for producing a silicon carbide-based ceramic honeycomb structure by extruding a moldable material obtained by kneading silicon carbide particles, a binder containing alumina source particles and magnesia source particles, and an organic binder into a honeycomb shape, drying the obtained green body, and then sintering it in an air atmosphere in a temperature range of 1200 to 1350°C (Patent Document 4). In this method, sintering is performed at a lower temperature than ever in a non-oxidizing atmosphere, and calcination and heat treatment after sintering are not required, so that a silicon carbide-based ceramic honeycomb structure can be produced at lower cost than ever.

However, there is a need for a ceramic honeycomb structure used in ceramic honeycomb filters that has higher thermal shock resistance than ever as well as being capable of being produced at a lower cost than ever.

### PRIOR ART REFERENCES

Patent Document 1: JP 2002-201082 A
Patent Document 2:JP 2019-167278 A
Patent Document 3:JP 2017-178721 A
Patent Document 4:WO 2022/202903 A1

### OBJECT OF THE INVENTION

Accordingly, an object of the present invention is to provide a silicon carbide-based ceramic honeycomb structure which has higher thermal shock resistance than ever as well as being capable of being produced at a lower cost than ever.

### SUMMARY OF THE INVENTION

In order to achieve the above object, the present inventors have made intense research into means for obtaining a silicon carbide-based ceramic honeycomb structure having higher thermal shock resistance than ever even by a sintering step in which a sintering temperature is lower than ever and a non-oxidizing atmosphere is not required, and have conceived the present invention.

That is, the silicon carbide-based ceramic honeycomb structure of the present invention comprises a plurality of flow paths extending from a first end surface to a second end surface that are defined by porous cell walls, wherein the cell walls comprise aggregates made of silicon carbide, a SiO₂ layer existing on a surface of the aggregates, and a binder phase including a cordierite phase and a spinel phase, wherein there are portions in which the aggregates are bonded together by the SiO₂ layer without interposing the binder phase, and portions in which the aggregates are bonded together by the SiO₂ layer via the binder phase, wherein the SiO₂ layer has an amorphous SiO₂ phase and a crystalline SiO₂ phase, and wherein the silicon carbide-based ceramic honeycomb structure has a coefficient of thermal expansion (between room temperature and 800°C) of 49 × 10⁻⁷/°C or less.

The spinel phase preferably has an amorphous spinel phase and a crystalline spinel phase. In the spinel phase, a mass ratio of the amorphous spinel phase to the crystalline spinel phase is preferably 3 or more.

A mass ratio of the amorphous SiO₂ phase to the crystalline SiO₂ phase in the SiO₂ layer is preferably 3 or more.

A ratio (t₁/t₂) of a thickness t₁ of the SiO₂ layer at the portions in which the aggregates are bonded together by the SiO₂ layer without interposing the binder phase to a thickness t₂ of the SiO₂ layer at the portions in which the aggregates are bonded together by the SiO₂ layer via the binder phase is preferably greater than 1 (t₁ > t₂).

A molar ratio M₁ of the cordierite phase [= number of moles of the cordierite phase / (number of moles of the cordierite phase + number of moles of the spinel phase)] is preferably 0.20 to 0.90, more preferably 0.45 to 0.90.

A total content of the cordierite phase and the spinel phase in the binder phase is preferably 35% by mass or more.

A preferred silicon carbide-based ceramic honeycomb structure of the present invention comprises: porous cell walls defining a plurality of flow paths extending from a first end surface to a second end surface; and an outer peripheral wall,
wherein the cell walls comprise aggregates made of silicon carbide, a SiO₂ layer existing on a surface of the aggregates, and a binder phase including a cordierite phase and a spinel phase,
wherein the spinel phase has an amorphous spinel phase and a crystalline spinel phase,
wherein a mass ratio of the amorphous spinel phase to the crystalline spinel phase in the spinel phase is 3 or more,
wherein there are portions in which the aggregates are bonded by the SiO₂ layer without interposing the binder phase, and portions in which the aggregates are bonded together by the SiO₂ layer via the binder phase,
wherein the SiO₂ layer has an amorphous SiO₂ phase and a crystalline SiO₂ phase,
wherein a mass ratio of the amorphous SiO₂ phase to the crystalline SiO₂ phase in the SiO₂ layer is 3 or more,
wherein a molar ratio M₁ of the cordierite phase [= number of moles of the cordierite phase / (number of moles of the cordierite phase + number of moles of the spinel phase)] in the binder phase is 0.2 or more, and
wherein the silicon carbide-based ceramic honeycomb structure has a coefficient of thermal expansion (between room temperature and 800°C) of 49 × 10⁻⁷/°C or less.

The flow paths preferably consist of first flow paths and second flow paths that are alternately arranged in a transverse direction, the first flow path being open at the first end surface and provided with plugs at the second end surface, and the second flow path being provided with plugs at the first end surface and open at the second end surface.

In the transverse cross section (cross section perpendicular to the flow direction), a cross-sectional area of the first flow path is preferably larger than a cross-sectional area of the second flow path.

The ceramic honeycomb segment assembly of the present invention comprises a plurality of honeycomb segments bonded to each other at their outer peripheral wall surfaces, wherein each of the honeycomb segments is made of the above-mentioned silicon carbide-based ceramic honeycomb structure.

### EFFECTS OF THE INVENTION

According to the present invention, by sintering at a lower temperature than ever without requiring a non-oxidizing atmosphere, specifically, by a sintering step in an air atmosphere having a first keeping step in which the temperature is kept in a relatively low temperature range of 1100 to 1200°C and a second keeping step in which the temperature is kept in a temperature range of 1250 to 1350°C, a silicon carbide-based ceramic honeycomb structure having higher thermal shock resistance than ever can be produced at lower cost than ever.

### BRIEF DESCRIPTION OF THE DRAWINGS

Fig. 1(a) is a front view schematically showing an example of a ceramic honeycomb structure constituting an integrated ceramic honeycomb filter.
Fig. 1(b) is a longitudinal cross-sectional view schematically showing an example of a ceramic honeycomb structure constituting an integrated ceramic honeycomb filter.
Fig. 2 is a perspective view schematically showing an example of a ceramic honeycomb segment constituting a segment-bonded ceramic honeycomb filter.
Fig. 3 is a perspective view schematically showing an example of a segment-bonded ceramic honeycomb filter.
Fig. 4 is a perspective view schematically showing another example of a ceramic honeycomb segment.
Fig. 5 is a partially enlarged cross-sectional view schematically showing a bonded state of an aggregate and a binder phase in a cell wall of the silicon carbide-based ceramic honeycomb structure of the present invention.
Fig. 6 shows a secondary electron image by EPMA (magnification: 500 times) of a sample cut out from a cell wall of the silicon carbide-based ceramic honeycomb structure of Example 1.
Fig. 7 is a diagram showing each phase obtained by element mapping of Fig. 6.

### DESCRIPTION OF THE PREFERRED EMBODIMENTS

Embodiments of the present invention will be described in detail below with reference to the attached drawings, but the present invention is not limited thereto, and various changes, modifications, or improvements can be added without departing from the technical idea of the present invention.

### [1] Silicon carbide-based ceramic honeycomb structure

The silicon carbide-based ceramic honeycomb structure of the present invention comprises porous cell walls defining a plurality of flow paths extending from a first end surface to a second end surface, and an outer peripheral wall, wherein the cell walls comprise aggregates made of silicon carbide, a SiO₂ layer existing on a surface of the aggregates, and a binder phase including a cordierite phase and a spinel phase, wherein there are portions in which the aggregates are bonded together by the SiO₂ layer without interposing the binder phase, and portions in which the aggregates are bonded together by the SiO₂ layer via the binder phase, wherein the SiO₂ layer has an amorphous SiO₂ phase and a crystalline SiO₂ phase, and wherein the silicon carbide-based ceramic honeycomb structure has a coefficient of thermal expansion (between room temperature and 800°C) of 49 × 10⁻⁷/°C or less. The silicon carbide-based ceramic honeycomb structure of the present invention basically consists of a porous composite material composed of silicon carbide aggregate particles and an oxide ceramics-based binder.

### (1) Aggregates

The aggregates, which are one of the substances constituting the cell walls, are particles made of silicon carbide and have a SiO₂ layer on their surfaces. There are portions in which the aggregates are bonded together by the SiO₂ layer without interposing a binder phase, and portions in which the aggregates are bonded together by the SiO₂ layer via a binder phase. The SiO₂ layer has an amorphous SiO₂ phase and a crystalline SiO₂ phase. Since the amorphous SiO₂ phase having a small coefficient of thermal expansion suppresses the thermal expansion of the SiO₂ layer to be small, the ceramic honeycomb structure of the present invention has a low coefficient of thermal expansion and excellent thermal shock resistance.

When the mass ratio of the amorphous SiO₂ phase to the crystalline SiO₂ phase in the SiO₂ layer is 3 or more, the proportion of the amorphous SiO₂ phase having a small coefficient of thermal expansion is sufficiently large, so that the thermal expansion of the SiO₂ layer can be further suppressed, and the thermal shock resistance of the ceramic honeycomb structure is improved. The mass ratio of the amorphous SiO₂ phase to the crystalline SiO₂ phase in the SiO₂ layer is more preferably 3.1 to 7.5.

A ratio (t₁/t₂) of a thickness t₁ of the SiO₂ layer at the portions in which the aggregates are bonded together without interposing the binder phase to a thickness t₂ of the SiO₂ layer at the portions in which the aggregates are bonded together via the binder phase is preferably greater than 1 (t₁ > t₂). When t₁ > t₂, the aggregates are largely bonded by the amorphous SiO₂ phase having a small coefficient of thermal expansion, whereby the thermal expansion of the ceramic honeycomb structure is suppressed to be small, and the thermal shock resistance is improved. t₁/t₂ is more preferably 2.0 to 3.5.

The thickness t₁ of the SiO₂ layer at the portions in which the aggregates are bonded together without interposing the binder phase and the thickness t₂ of the SiO₂ layer at the portions in which the aggregates are bonded together via the binder phase can be measured by the following method. The cut cross section of a test piece cut out from a ceramic honeycomb structure is ground, and randomly selected 6 fields of view at 500x magnification (long side: 256 µm, short side: 192 µm) are mapped and analyzed by an Electron Probe Micro Analyzer (EPMA). For each field of view, after mapping 4 elements of O, Si, Al, and Mg, a superimposition process is performed to obtain an analysis photograph color-coded into 5 types: Si, Si + O, Mg + Si + O, Al + Mg + O, and Al + Mg + Si + O. On each analysis photograph, 10 straight lines are drawn at equal intervals in each of the horizontal and vertical directions. The lengths of the respective straight lines passing through the SiO₂ layer at the portions in which the aggregates are bonded together without interposing the binder phase are measured, and the sum of the measured lengths for all straight lines in the horizontal and vertical directions is divided by the number of the measurement points to obtain an average value, which is defined as t₁'. Similarly, the lengths of the respective straight lines passing through the SiO₂ layer at the portions in which the aggregates are bonded together via the binder phase are measured, and the sum of the measured lengths for all straight lines in the horizontal and vertical directions is divided by the number of the measurement points to obtain an average value, which is defined as t₂'. This procedure is performed for all 6 fields of view of the same test piece, and the average values of t₁' and t₂' are obtained and defined as t₁ and t₂ of the test piece.

### (2) Binder phase

The binder phase has a cordierite phase and a spinel phase. In addition to the cordierite phase and the spinel phase, the binder phase may contain at least one crystalline phase or amorphous phase of cristobalite, mullite, forsterite, protoenstatite, alumina (corundum), and magnesia (periclase).

The spinel phase preferably has an amorphous spinel phase and a crystalline spinel phase. The amorphous spinel phase having a small coefficient of thermal expansion can keep the thermal expansion of the binder phase small, resulting in good thermal shock resistance as a ceramic honeycomb structure. In addition, since the strength is lowered if the spinel phase is composed only of an amorphous spinel, it is preferable that a crystalline spinel phase is also included.

A mass ratio of the amorphous spinel phase to the crystalline spinel phase in the binder phase is preferably 3 or more. Thereby, the proportion of the amorphous spinel phase having a small coefficient of thermal expansion in the binder phase increases, so that the thermal expansion of the binder phase can be further suppressed, and the thermal shock resistance can be improved. The mass ratio of the amorphous spinel phase to the crystalline spinel phase is more preferably 3.1 to 7.5.

In order to make the strength and thermal shock resistance of the binder phase bonding the aggregates sufficiently high, a molar ratio M₁ of the cordierite phase in the binder phase is preferably 0.2 or more, and more preferably 0.45 to 0.90. The molar ratio M₁ of the cordierite phase is calculated by dividing the number of moles of the cordierite phase by (number of moles of the cordierite phase + number of moles of the spinel phase). When the molar ratio M₁ of the cordierite phase is less than 0.2, the strength of the binder phase is lowered and the coefficient of thermal expansion is increased, thereby deteriorating the thermal shock resistance of the ceramic honeycomb structure. In addition, when the molar ratio M₁ of the cordierite phase exceeds 0.90, the heat resistance of the binder phase is lowered, and the porosity of the cell walls is lowered. The lower limit of the molar ratio M₁ is more preferably 0.47, further preferably 0.50, and most preferably 0.55. Also, the upper limit of the molar ratio M₁ is more preferably 0.89, further preferably 0.85, and most preferably 0.83.

To ensure that the binder phase has sufficient strength and thermal shock resistance, the total content of the cordierite phase and the spinel phase in the binder phase is preferably 35% by mass or more, more preferably 38% by mass or more, and most preferably 40% by mass or more. The upper limit of the total content of the cordierite phase and the spinel phase is not particularly limited, but may be 80% by mass or less, for example, 75% by mass or less.

The molar ratio M₁ of the cordierite phase can be determined by the following method. A part of the sintered silicon carbide-based ceramic honeycomb structure is powdered and measured by X-ray diffraction (hereinafter referred to as XRD or powder X-ray diffraction). From the obtained powder diffraction chart, the peak intensity of the (110) plane of cordierite, the peak intensity of the (311) plane of spinel, the peak intensity of the (101) plane of cristobalite which is SiO₂, the peak intensity of the (110) plane of mullite, and the peak intensity of the (130) plane of forsterite are measured, to calculate the mass ratio of each crystalline phase of cordierite, spinel, cristobalite, mullite, and forsterite in the entire binder phase. Assuming that the mass per mole of cordierite and spinel is 585.0 and 142.3, respectively, the number of moles of cordierite and spinel is calculated from the obtained mass ratio. From the number of moles of the cordierite phase and the number of moles of the spinel phase, the molar ratio M₁ of the cordierite phase is determined by the formula: number of moles of the cordierite phase / (number of moles of the cordierite phase + number of moles of the spinel phase).

The total content of the cordierite phase and the spinel phase in the binder phase is determined from the mass ratios of the cordierite phase, the spinel phase, the cristobalite phase, the mullite phase, and the forsterite phase determined by the above method, by the formula: (total of mass ratios of the cordierite phase and the spinel phase) / (total of mass ratios of the cordierite phase, the spinel phase, the cristobalite phase, the mullite phase, and the forsterite phase).

The mass ratio of the amorphous SiO₂ phase to the crystalline SiO₂ phase, and the mass ratio of the amorphous spinel phase to the crystalline spinel phase are determined using both powder X-ray diffraction and EPMA. That is, the proportion Wc (% by mass) of the crystalline SiO₂ phase is determined by XRD, the proportion W (% by mass) of the SiO₂ phase including both amorphous SiO₂ and crystalline SiO₂ is determined by EPMA, and the proportion Wa (% by mass) of the amorphous SiO₂ is determined by subtracting Wc from W. By dividing the proportion Wa (% by mass) of amorphous SiO₂ by the proportion Wc (% by mass) of crystalline SiO₂, the mass ratio Wa/Wc of the amorphous SiO₂ phase to the crystalline SiO₂ phase is determined. The mass ratio of the amorphous spinel phase to the crystalline spinel phase can be similarly determined by the same method.

The silicon carbide-based ceramic honeycomb structure of the present invention having the above structures has a coefficient of thermal expansion (between room temperature and 800°C) of 49 × 10⁻⁷/°C or less. The coefficient of thermal expansion is preferably 48 × 10⁻⁷/°C or less, and more preferably 47 × 10⁻⁷/°C or less.

The silicon carbide-based ceramic honeycomb structure of the present invention having the above structures has a maximum bending stress exceeding 4.0 MPa. The maximum bending stress is preferably 4.5 MPa or more, and more preferably 5.0 MPa or more.

The silicon carbide-based ceramic honeycomb structure of the present invention having the above structures has a thermal shock fracture resistance value R in the range of 350 to 700°C, calculated from R = σ(1 - ν) / αE (where σ is the maximum bending stress, E is the Young's modulus, α is the coefficient of thermal expansion, and ν is the Poisson's ratio). The lower limit of the thermal shock fracture resistance value is preferably 380°C, more preferably 400°C, and the upper limit is preferably 680°C, more preferably 660°C.

### (3) Structure

As shown in Fig. 1(a) and Fig. 1(b), a silicon carbide-based ceramic honeycomb structure 110 according to an embodiment of the present invention has cell walls 12 constituting first and second flow paths 13, 14, and an outer peripheral wall 11 formed on the outer peripheral surface thereof, to constitute an integrated ceramic honeycomb filter 100. The first flow path 13 is open at a first end surface 15a on the exhaust-gas-inlet side and is provided with a plug 16b at a second end surface 15b on the exhaust-gas-outlet side, and the second flow path 14 is provided with a plug 16a at the first end surface 15a and is open at the second end surface 15b. The plugs 16a, 16b are alternately arranged in a checkerboard pattern on the respective end surfaces 15a, 15b.

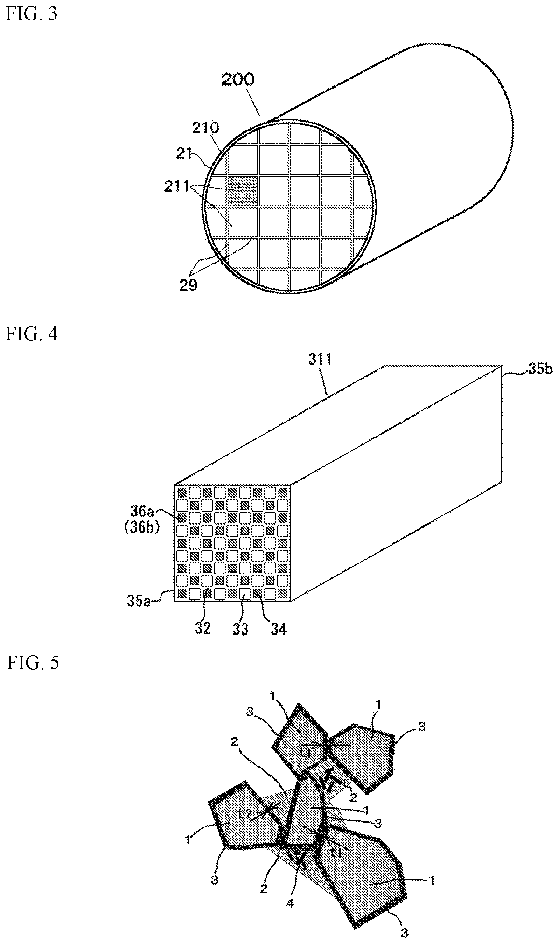

A silicon carbide-based ceramic honeycomb filter 200 shown in Fig. 3 is obtained by using a silicon carbide-based ceramic honeycomb structure according to another embodiment of the present invention shown in Fig. 2 as a honeycomb segment 211, and integrally bonding outer peripheral wall surfaces of a plurality of honeycomb segments 211 via a bonding material layer 29. Each ceramic honeycomb segment 211 has cell walls 22 constituting first and second flow paths 23, 24, and an outer peripheral wall 21 formed on the outer peripheral surface thereof. The first flow path 23 is open at a first end surface 25a on the exhaust-gas-inlet side and is provided with a plug 26b at a second end surface 25b on the exhaust-gas-outlet side, and the second flow path 24 is provided with a plug 26a at the first end surface 25a and is open at the second end surface 25b. The plugs 26a, 26b are alternately arranged in a checkerboard pattern on the respective end surfaces 25a, 25b.

The plugs 16a, 16b, 26a, 26b may be embedded in either a honeycomb green body before sintering or a honeycomb structure after sintering. In addition, the plugs 16a, 16b, 26a, 26b may be embedded so as to be flush with the respective end surfaces 15a, 15b, 25a, 25b, or may be embedded at positions inside from the respective end surfaces 15a, 15b, 25a, 25b.

As shown in Fig. 4, in a transverse cross section (cross section perpendicular to the flow direction of exhaust gas) of a silicon carbide-based ceramic honeycomb segment 311, a cross-sectional area of a first flow path (outlet-side-plugged flow path) 33 may be larger than a cross-sectional area of a second flow path (inlet-side-plugged flow path) 34.

The transverse cross-sectional shape of the first and second flow paths may be a polygonal shape such as a triangle, a quadrangle, a hexagon, an octagon, etc., or a shape in which each vertex of the polygon is rounded into an arc shape. The cross-sectional shapes of the first and second flow paths may be the same or different.

In order to achieve excellent thermal shock resistance, the thickness of the cell walls of the silicon carbide-based ceramic honeycomb structure of the present invention is preferably 150 to 280 µm.

In order to maintain low pressure loss and high strength, the porosity of the cell walls of the silicon carbide-based ceramic honeycomb structure of the present invention is preferably 30 to 50%. When the porosity is less than 30%, the pressure loss of the ceramic honeycomb structure is large. On the other hand, when it exceeds 50%, sufficient strength cannot be obtained. The lower limit of the porosity is more preferably 35%, and most preferably 37%. Also, the upper limit of the porosity is more preferably 48%, and most preferably 46%.

In order to maintain high strength, the median pore diameter of the cell walls of the silicon carbide-based ceramic honeycomb structure of the present invention is preferably 3 to 20 µm. When the median pore diameter is less than 3 µm, the pressure loss of the ceramic honeycomb structure is large. On the other hand, when it exceeds 20 µm, sufficient strength cannot be obtained. The lower limit of the median pore diameter is more preferably 5 µm, and most preferably 7 µm. Also, the upper limit of the median pore diameter is more preferably 18 µm, and most preferably 16 µm.

The porosity and the median pore diameter of the cell walls can be measured by a mercury porosimetry. A test piece (10 mm × 10 mm × 10 mm) cut out from the ceramic honeycomb structure is placed in a measurement cell of AutoPore III manufactured by Micromeritics, and after reducing the pressure in the cell, mercury is introduced and pressurized, to determine the relationship between the pressure at the time of pressurization and the volume of mercury forced into pores existing in the test piece. The pressure is converted into a pore diameter, and a cumulative pore volume (corresponding to the volume of mercury) accumulated from the larger pore diameter side to the smaller side is plotted against the pore diameter to obtain a graph showing the relationship between the pore diameter and the cumulative pore volume. The pressure at which mercury is introduced is 0.5 psi (0.35 × 10⁻³ kg/mm²), and as constants when calculating the pore diameter from the pressure, values of contact angle = 130° and surface tension = 484 dyne/cm are used. The cumulative pore volume when the pressurizing force of mercury is 1800 psi (1.26 kg/mm², corresponding to a pore diameter of about 0.1 µm) is defined as a total pore volume V (cm³/g). The porosity P (volume %) is determined from the measured value of the total pore volume V by the formula P = ρV / (1 + ρV) × 100 [where ρ is the true density of silicon carbide (= 3.2 g/cm³)]. The median pore diameter is the pore diameter at which the cumulative pore volume becomes 50% of the total pore volume in the graph showing the relationship between the pore diameter and the cumulative pore volume.

After integrally bonding a plurality of honeycomb segments 211 with a bonding material layer 29, the outer periphery of the ceramic honeycomb segment assembly 210 is processed such that the outer peripheral shape in the transverse cross section becomes a shape such as a circle, an ellipse, a triangle, a quadrangle, etc., and the processed outer peripheral surface is coated with a coating material to form an outer peripheral wall 21.

### [2] Method for producing silicon carbide-based ceramic honeycomb structure

The silicon carbide-based ceramic honeycomb structure of the present invention can be produced, for example, by the following method. First, silicon carbide particles serving as aggregates, raw material powder for a binder phase composed of alumina source particles and magnesia source particles, and an organic binder are mixed. The raw material powder for a binder phase may contain spinel particles, mullite particles, forsterite particles, etc. containing an alumina source and a magnesia source, in addition to the alumina source particles and the magnesia source particles.

The alumina source particles are particles of a compound containing alumina (Al₂O₃) or particles of a compound containing alumina (Al₂O₃) and magnesia (MgO). Specifically, the alumina source particles are preferably alumina particles or aluminum hydroxide particles.

The magnesia source particles are particles of a compound containing magnesia (MgO) or particles of a compound containing alumina (Al₂O₃) and magnesia (MgO). Specifically, the magnesia source particles are preferably magnesium oxide particles, magnesium hydroxide particles, or talc particles.

By using alumina particles or aluminum hydroxide particles as the alumina source particles and using at least one of magnesium oxide particles, magnesium hydroxide particles, and talc particles as the magnesia source particles, sintering at a lower temperature than ever becomes possible without requiring a non-oxidizing atmosphere.

In order to obtain a binder phase containing a cordierite phase and a spinel phase, a molar ratio M₂ [= number of moles of (Al₂O₃) content / (number of moles of (Al₂O₃) content + number of moles of (MgO) content)] of the alumina source particles in the raw material powder for a binder phase is preferably 0.32 to 0.50. The molar ratio M₂ is determined by calculating the number of moles of the alumina (Al₂O₃) content and the number of moles of the magnesia (MgO) content from the masses of the blended alumina source particles and magnesia source particles, and dividing the number of moles of the alumina (Al₂O₃) content by the total number of moles of the alumina (Al₂O₃) content and the magnesia (MgO) content.

For example, when aluminum hydroxide [Al(OH)₃] is used as the alumina source and magnesium hydroxide [Mg(OH)₂] or talc [Mg₃Si₄O₁₀(OH)₂] is used as the magnesia source, the alumina content in the aluminum hydroxide, and the magnesia content in the magnesium hydroxide and talc can be expressed respectively as:

Al(OH)₃ = (1/2)Al₂O₃ + (3/2)H₂O

Mg(OH)₂ = MgO + H₂O

Mg₃Si₄O₁₀(OH)₂ = 3MgO + 4SiO₂ + H₂O

Therefore, it can be calculated that the alumina content per mole of aluminum hydroxide is 0.5 moles, the magnesia content per mole of magnesium hydroxide is 1 mole, and the magnesia content per mole of talc is 3 moles. The number of moles of the alumina content and the magnesia content is determined using this relationship, and the molar ratio M₂ is determined. Also, when particles of a compound (for example, spinel) containing both alumina and magnesia are used, the alumina (Al₂O₃) content and the magnesia (MgO) content in this compound are calculated to determine the molar ratio M₂.

When the molar ratio M₂ is less than 0.32 or more than 0.50, the thermal shock resistance is lowered. The lower limit of the molar ratio M₂ is more preferably 0.35, and most preferably 0.40. The upper limit of the molar ratio M₂ is more preferably 0.48.

Since the raw material powder for a binder phase used for producing the silicon carbide-based ceramic honeycomb structure of the present invention is an oxide ceramic composed of alumina source particles and magnesia source particles, and is not metallic silicon used in the prior art, sintering in a non-oxidizing atmosphere and subsequent oxidation treatment, which were conventionally required to bond metallic silicon, become unnecessary. As a result, the cost required for sintering can be reduced, and the ceramic honeycomb structure can be produced at lower cost than the prior art.

The total amount of the alumina source particles and the magnesia source particles relative to 100% by mass of the silicon carbide particles is preferably 5 to 20% by mass. When the total amount is less than 5% by mass, the bonding strength of the binder phase is lowered, and the strength of the ceramic honeycomb structure is lowered. On the other hand, when it exceeds 20% by mass, the thermal shock resistance of the ceramic honeycomb structure is lowered. The lower limit of the total amount of the alumina source particles and the magnesia source particles relative to 100% by mass of the silicon carbide particles is more preferably 6% by mass, and most preferably 7% by mass. Also, the upper limit of the total amount of the alumina source particles and the magnesia source particles is preferably 19% by mass, and most preferably 18% by mass.

The average particle diameter of the silicon carbide particles is preferably 20 to 50 µm. The average particle diameters of both the alumina source particles and the magnesia source particles are preferably 1 to 15 µm.

In order to obtain a ceramic honeycomb structure having an excellent porosity and median pore diameter, a median particle diameter D50 of the ceramic particles containing the silicon carbide particles and the raw material powder for a binder phase is preferably 15 to 45 µm. The lower limit of D50 is more preferably 18 µm, and most preferably 20 µm. Also, the upper limit of D50 is more preferably 40 µm, and most preferably 35 µm.

In order to produce the silicon carbide-based ceramic honeycomb structure of the present invention, it is preferable that pore-forming materials (graphite particles, foamable resin particles, foamed resin particles, water-absorbent resin particles, starch, silica gel particles, etc.) are not added, and only an organic binder having a small pore-forming effect is added. Examples of the organic binder include methyl cellulose, ethyl cellulose, ethyl methyl cellulose, carboxymethyl cellulose, hydroxypropyl methyl cellulose, hydroxyethyl cellulose, hydroxymethyl cellulose, hydroxyethyl ethyl cellulose, and the like. Among them, hydroxypropyl methyl cellulose or methyl cellulose is preferred. The amount of the organic binder added is preferably 5 to 15% by mass relative to 100% by mass of the molding raw material.

Water is added to the mixed raw materials and kneaded to form a plastic moldable material. In order to provide the moldable material with moldable hardness, the amount of water added is preferably 20 to 50% by mass relative to the molding raw material.

The formed moldable material is extruded from a die for forming a honeycomb structure by a known method to form a green body having a honeycomb structure. After drying this green body, the end surfaces and the outer periphery are processed if necessary, and it is sintered to obtain a silicon carbide-based ceramic honeycomb structure. The drying method is not particularly limited, but for example, hot air drying, microwave heating drying, high-frequency heating drying, etc. are preferred.

Sintering in an air atmosphere preferably comprises a first keeping step of keeping at a first temperature range of 1100 to 1200°C for 0.5 to 5 hours, and a second keeping step of keeping at a second temperature range of 1250 to 1350°C for 0.5 to 5 hours. Thereby, the synthesis from the alumina source and the magnesia source to a spinel phase (MgO·Al₂O₃) (a crystalline spinel phase and an amorphous spinel phase) is promoted, and a SiO₂ layer (consisting of a crystalline SiO₂ phase and an amorphous SiO₂ phase) is generated by oxidation on the surface of the silicon carbide particles.

Due to the amorphous SiO₂ phase having a significantly smaller coefficient of thermal expansion than the crystalline SiO₂ phase, the thermal expansion of the SiO₂ layer can be suppressed to be small. Furthermore, due to the amorphous spinel phase in the binder phase and the amorphous SiO₂ phase in the SiO₂ layer, cordierite is synthesized at a lower temperature than the ordinary synthesis temperature of cordierite. Since the binder phase generated in this way has its coefficient of thermal expansion suppressed to be small, a silicon carbide-based ceramic honeycomb structure having a thermal shock resistance equal to or higher than ever can be obtained at a lower cost than ever.

When the temperature range of the first keeping step is less than 1100°C, the synthesis of the spinel phase is not promoted, making it difficult to synthesize cordierite in the binder phase. On the other hand, when it exceeds 1200°C, the generation of the crystalline SiO₂ phase in the SiO₂ layer is promoted, making it difficult to suppress the thermal expansion of the SiO₂ layer to be small, and also increasing the coefficient of thermal expansion of the synthesized cordierite.

When the temperature range of the second keeping step is less than 1250°C, the amorphous SiO₂ phase is less likely to be generated in the SiO₂ layer, whereby it becomes difficult to suppress the thermal expansion of the SiO₂ layer to be small, and also the synthesized cordierite has a large coefficient of thermal expansion. On the other hand, when it exceeds 1350°C, the sintering temperature becomes too high, making it difficult to keep the sintering cost lower than ever.

In contrast, in the absence of the second keeping step, (a) if the sintering temperature is high, the ratio of the amorphous SiO₂ phase to the crystalline SiO₂ phase is small, and also the ratio of the thickness t₁ of the SiO₂ layer at portions where the aggregates made of silicon carbide are bonded together without interposing the binder phase to the thickness t₂ of the SiO₂ layer at portions where they are bonded via the binder phase is small, and (b) if the sintering temperature is low, the formation of the SiO₂ layer is insufficient, and also the molar ratio M₁ of the cordierite phase in the binder phase is small, so that in either case, there is a problem that the obtained silicon carbide-based ceramic honeycomb structure has an excessively large coefficient of thermal expansion (between room temperature and 800°C).

In the sintered silicon carbide-based ceramic honeycomb structure, plugs are formed at the opening on the second end surface side of the first flow path and at the opening on the first end surface side of the second flow path, respectively. As the plugging material, a slurry containing silicon carbide particles is preferably used. Note that the plugs may be formed before the silicon carbide-based ceramic honeycomb structure is sintered.

A bonding material is applied to the outer peripheral wall surface of each honeycomb segment 211 formed of the silicon carbide-based ceramic honeycomb structure having plugs formed therein, and the outer peripheral wall surfaces of a plurality of honeycomb segments 211 are bonded together by a bonding material layer 29 as shown in Fig. 3 to form an integrated ceramic honeycomb segment assembly 210. The bonding material is preferably a paste made of silicon carbide particles and colloidal silica.

After drying the ceramic honeycomb segment assembly 210, it is sintered in a temperature range of 1000 to 1400°C. The outer peripheral portion of the sintered silicon carbide-based ceramic honeycomb segment assembly 210 is processed into a circular shape by a lathe. Next, the circular outer peripheral surface is coated with a skin material consisting of silicon carbide particles and inorganic particles (colloidal silica) to form an outer peripheral wall, and then it is dried, to obtain a silicon carbide-based ceramic honeycomb filter 200.

The present invention will be described in more detail by the following examples, but the present invention is not limited to these examples.

### Example 1

With respect to 100% by mass of silicon carbide particles (D50: 29.3 µm) serving as aggregates, 17.4% by mass of a raw material powder for a binder phase consisting of aluminum hydroxide particles, magnesium hydroxide particles, and talc particles was mixed so that a molar ratio M₂ of alumina [(Al₂O₃)/(Al₂O₃+MgO)] became 0.45, to obtain a mixture powder having a median diameter of 24.8 µm. After mixing hydroxypropyl methyl cellulose as an organic binder into this mixture powder, water was added and kneaded to form a plastic moldable material. The moldable material was extruded from a die for forming a honeycomb structure of a screw-molding machine to obtain a honeycomb green body having a quadrilateral peripheral shape of 34 mm in each side and a length of 304 mm. The honeycomb green body was dried with a hot-air drying machine at 120°C for 2 hours, and then sintered under conditions having a first keeping step and a second keeping step shown in Table 1 to obtain a silicon carbide-based ceramic honeycomb structure having a cell wall thickness of 8 mil (0.20 mm) and a cell density of 300 cpsi (46.5 cells/cm²).

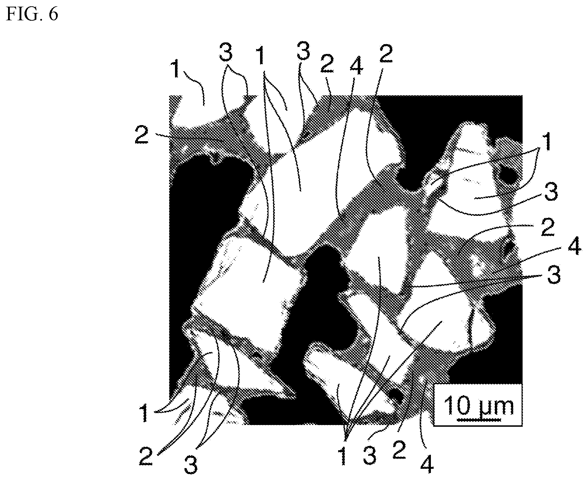

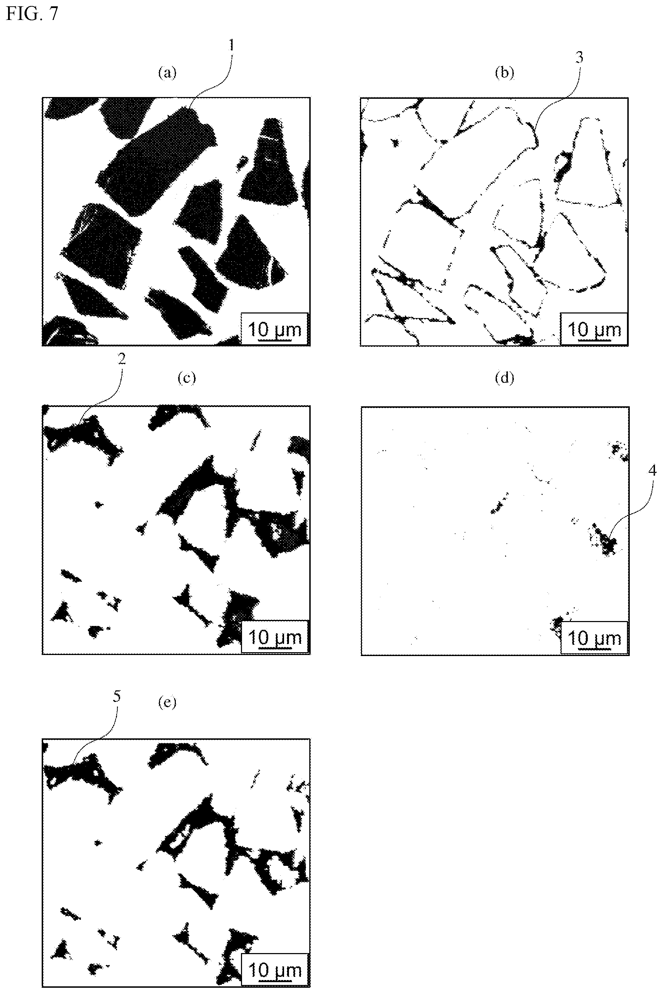

Fig. 6 shows a secondary electron image by EPMA (magnification: 500 times) of a sample cut out from the cell wall of the silicon carbide-based ceramic honeycomb structure of Example 1. In the same field of view as Fig. 6, after mapping of four elements of O, Si, Al, and Mg by EPMA, a superimposition process was performed, and it was divided into four regions of Si, Si + O, Al + Mg + O, and Al + Mg + Si + O. Each region is shown in Fig. 7. In Fig. 7, (a) shows an Si region corresponding to an aggregate 1 made of silicon carbide, (b) shows an Si + O region corresponding to an SiO₂ layer 3, (c) shows a binder phase 2, (d) shows an Al + Mg + O region corresponding to a spinel phase 4, and (e) shows an Al + Mg + Si + O region corresponding to a cordierite phase 5. The proportion of the cordierite phase is determined by subtracting the proportion of the spinel phase 4 from the proportion of the binder phase 2.

From Figs.6 and 7, it was found that the cell wall of the silicon carbide-based ceramic honeycomb structure of Example 1 had aggregates 1 and a binder phase 2, the SiO₂ layer 3 existed on the surface of the aggregates 1, and the binder phase 2 contained a cordierite phase and a spinel phase 4.

### Examples 2 to 6

Silicon carbide-based ceramic honeycomb structures having a cell wall thickness of 8 mil (0.20 mm) and a cell density of 300 cpsi (46.5 cells/cm²) were obtained in the same manner as in Example 1, except that sintering conditions having the first and second keeping steps were changed as shown in Table 1. In the observation by EPMA, all of them had the same microstructural structure as in Example 1, and it was confirmed that the cell wall of the silicon carbide-based ceramic honeycomb structure had aggregates 1 and a binder phase 2, an SiO₂ layer 3 existed on the surface of the aggregates 1, and the binder phase 2 contained a cordierite phase and a spinel phase.

### Comparative Example 1

With respect to 100% by mass of silicon carbide particles (D50: 38.4 µm) serving as aggregates, 25.0% by mass of metallic silicon particles (D50: 11.8 µm) for a binder phase was blended to obtain ceramic particles having a median diameter of 32.9 µm. Hydroxypropyl methyl cellulose as an organic binder was mixed into the ceramic particles, and kneaded with water to form a plastic moldable material. The moldable material was extruded from a die for forming a honeycomb structure of a screw-molding machine to obtain a honeycomb green body having a quadrilateral peripheral shape of 34 mm in each side and a length of 304 mm. The honeycomb green body was dried with a hot-air drying machine at 120°C for 2 hours, then degreased at 550°C for 3 hours, and then sintered in an argon atmosphere at a temperature of 1450°C for 5 hours to obtain a silicon carbide-based ceramic honeycomb structure having a cell wall thickness of 8 mil (0.20 mm) and a cell density of 300 cpsi (46.5 cells/cm²). In Comparative Example 1 in which only metallic silicon particles are used as a raw material for the binder phase, a binder phase composed of metallic silicon, and the silicon carbide particles (aggregates) covered with a SiO₂ layer formed by oxidation of Si derived from the raw material of metallic silicon particles or silicon carbide particles upon sintering, were observed, but a binder phase 2 containing a cordierite phase and a spinel phase was not observed. In Comparative Example 1, the ratio of crystalline SiO₂ to amorphous SiO₂ was not measured.

### Comparative Examples 2 and 3

Honeycomb green bodies obtained in the same manner as in Example 1 were dried with a hot-air drying machine at 120°C for 2 hours, and then sintered under conditions having only a first keeping step as shown in Table 1 to obtain silicon carbide-based ceramic honeycomb structures having a cell wall thickness of 8 mil (0.20 mm) and a cell density of 300 cpsi (46.5 cells/cm²).

For the silicon carbide-based ceramic honeycomb structures of Examples 1 to 6 and Comparative Examples 1 to 3, the structure of the SiO₂ layer on the surface of the aggregates in the cell walls, the thickness t₁ of the SiO₂ layer at portions where the aggregates were bonded together without interposing the binder phase, the thickness t₂ of the SiO₂ layer at portions where the aggregates were bonded together via the binder phase, the structure of the binder phase, the mass ratio of the amorphous spinel phase to the crystalline spinel phase in the spinel phase in the binder phase, and the molar ratio M₁ of the cordierite phase in the binder phase were measured by the following methods.

That is, for each of the silicon carbide-based ceramic honeycomb structures of Examples 1 to 6 and Comparative Examples 1 to 3, the mass ratios occupied by crystalline SiO₂ (cristobalite), spinel, cordierite, and other compounds were respectively obtained by XRD, and a molar ratio M₁ of the cordierite phase in the binder phase was obtained using these mass ratios and the mass per mole of each compound. In addition, the mass % of the amorphous SiO₂ and crystalline SiO₂ and the mass % of the amorphous spinel and crystalline spinel in the binder phase were calculated by a method of obtaining the mass % of amorphous compounds by subtracting the mass % of the crystalline compounds obtained by XRD from the mass % of each compound (amorphous + crystalline) obtained by EPMA. The methods by XRD and EPMA are described in detail below. Note that the thicknesses t₁ and t₂ of the SiO₂ layer were measured by the method described in the section of "(1) Aggregates" above.

### (i) Identification of compounds and quantification of composition by XRD

A sample taken from each sintered honeycomb structure was crushed in an alumina mortar to obtain powder having an average particle diameter of about 10 µm. An X-ray diffraction measurement of each powder was performed using an automated multipurpose horizontal X-ray diffractometer SmartLab (manufactured by Rigaku) under the conditions of X-ray output: 45 kV, 200 mA, filter: Cu_K-beta, scan range: 8.0000 to 60.0000 deg., step width: 0.0100 deg., and scan speed: 26.9360 deg./min. From the peak heights (intensities) corresponding to cordierite (plane index (1,1,0), 2θ=10.4°), cristobalite which is SiO₂ (plane index (1,0,1), 2θ=21.8°), corundum (plane index (0,1,2), 2θ=25.6°), spinel (plane index (3,1,1), 2θ=36.8°), and periclase (plane index (2,0,0), 2θ=42.8°) in the obtained respective X-ray diffraction charts, a mass ratio of each compound was determined. The number of moles was calculated from the mass ratio of cordierite and spinel, assuming that the mass of 1 mole of cordierite and spinel was 585.0 and 142.3, respectively, and a molar ratio M₁ of the number of moles of the cordierite phase to the sum of the number of moles of the cordierite phase and the number of moles of the spinel phase [= number of moles of the cordierite phase / (number of moles of the cordierite phase + number of moles of the spinel phase)] was determined. All of these compounds identified by XRD were crystalline.

### (ii) Observation of distribution of compounds and quantification of composition by EPMA

A sample of 6 cells × 6 cells × 10 mm cut out from each honeycomb structure was embedded in resin, and the cut cross section was ground. Using a field emission electron probe micro analyzer (EPMA) (XA-8530F, manufactured by JEOL Ltd.), EPMA measurement of each ground surface was performed under beam irradiation conditions of acceleration voltage: 10.0 kV, beam current: 20 mA, analysis area: 128 µm × 96 µm, measurement pitch: 0.2 µm, and integration time: 0.01 ms/point. The analyzing crystals used for mapping were O: LSA70, Mg: Rubidium acid phthalate (RAP), Al: Ammonium dihydrogen phosphate (ADP), and Si: Pentaerythritol (PET).

In six randomly selected fields of view at 500x magnification (256 µm × 192 µm), after mapping for the four elements of O, Si, Al, and Mg, a superimposition process was performed to obtain analysis photographs color-coded into five types: Si, Si+O, Mg+Si+O, Al+Mg+O, and Al+Mg+Si+O. Because the five color-coded compounds are SiC, SiO₂, MgO, spinel, and cordierite, respectively, the mass % of each compound was calculated from the area ratio and true density occupied by each compound. Because the calculated mass % is the sum of the amorphous compound and the crystalline compound, the mass % of the amorphous compound is obtained by subtracting the mass % of the crystalline compound determined by XRD therefrom. By this method, the mass % of amorphous SiO₂ and crystalline SiO₂, and the mass % of amorphous spinel and crystalline spinel in the binder phase were calculated.

### (a) Structure of SiO₂ layer

The SiO₂ layer formed on the surface of the silicon carbide particles was confirmed to be composed of an amorphous SiO₂ phase and a crystalline SiO₂ phase, and the proportions (mass %) of the amorphous SiO₂ phase and the crystalline SiO₂ phase were determined by the above method in which the total mass % of amorphous SiO₂ and crystalline SiO₂ was measured by EPMA, and the mass % of crystalline SiO₂ was measured by XRD. The results are shown in Table 2-1.

### (b) Thicknesses t₁ and t₂ of SiO₂ layer

By the method described in the section of "(1) Aggregates", mapping analysis by EPMA was performed for six randomly selected fields of view at 500x magnification (long side 256 µm, short side 192 µm) to obtain a thickness t₁ of the SiO₂ layer at portions where the aggregates were bonded together without interposing the binder phase, and a thickness t₂ of the SiO₂ layer at portions where they were bonded together via the binder phase. The results are shown in Table 2-1.

### (c) Structure of binder phase

The structure of the binder phase was observed by the powder X-ray diffraction method described in the section of "(2) Binder Phase", and it was confirmed that the binder phase contained a cordierite phase and a spinel phase. The peak intensity of the (110) plane of cordierite, the peak intensity of the (311) plane of spinel, the peak intensity of the (101) plane of cristobalite, the peak intensity of the (110) plane of mullite, and the peak intensity of the (130) plane of forsterite were measured, to calculate the mass ratio of each crystalline phase of cordierite, spinel, cristobalite, mullite, and forsterite in the entire binder phase, and the proportion (mass %) of cordierite phase + spinel phase was determined. The results are shown in Table 2-2.

### (d) Mass ratio of amorphous spinel phase to crystalline spinel phase

The mass ratio of an amorphous spinel phase to a crystalline spinel phase was determined by the above method in which the total mass % of the amorphous spinel phase and the crystalline spinel phase was measured by EPMA, and the mass % of the crystalline spinel phase was measured by XRD. The results are shown in Table 2-2.

### (e) Molar ratio M₁ of cordierite phase

The mass % of the cordierite phase and the spinel phase obtained by the method described in "(i) Quantification of composition by XRD" above was converted to the number of moles, and a molar ratio M₁ of the cordierite phase was obtained from the formula of number of moles of the cordierite phase / (number of moles of the cordierite phase + number of moles of the spinel phase). The results are shown in Table 2-2.

The porosity, the median pore diameter, the coefficient of thermal expansion, and the thermal shock fracture resistance coefficient R of each silicon carbide-based ceramic honeycomb structure were measured by the following methods.

### (f) Measurement of porosity and median pore diameter

The porosity and the median pore diameter were measured by the mercury porosimetry described below. First, a test piece (10 mm × 10 mm × 10 mm) cut out from each silicon carbide-based ceramic honeycomb structure was housed in a measurement cell of AutoPore III manufactured by Micromeritics, and after reducing the pressure in the cell, mercury was introduced and pressurized, and the relationship between the pressure at the time of pressurization and the volume of mercury forced into pores existing in the test piece was obtained. The pressure was converted into a pore diameter, and a cumulative pore volume (corresponding to the volume of mercury) accumulated from the larger pore diameter side toward the smaller side was plotted against the pore diameter to obtain a graph showing the relationship between the pore diameter and the cumulative pore volume. The pressure for introducing mercury was 0.5 psi (0.35 × 10⁻³ kg/mm²), and constants used for calculating the pore diameter from the pressure were a contact angle of 130° and a surface tension of 484 dyne/cm. The cumulative pore volume when the pressurizing force of mercury was 1800 psi (1.26 kg/mm², corresponding to a pore diameter of about 0.1 µm) was set as the total pore volume. The porosity P (volume %) was determined from the measured value of the total pore volume V (cm³/g) using the calculation formula P = ρV / (1 + ρV) × 100, where ρ is the true density of silicon carbide (= 3.2 g/cm³). The median pore diameter was obtained by reading a pore diameter at which the cumulative pore volume became 50% of the total pore volume from the graph showing the relationship between the pore diameter and the cumulative pore volume. The results are shown in Table 3.

### (g) Measurement of coefficient of thermal expansion (CTE)

From each silicon carbide-based ceramic honeycomb structure, a test piece having a cross-sectional shape of 4.5 mm × 4.5 mm and a length of 50 mm was cut out so that the longitudinal direction substantially coincided with the flow path direction. Using a thermomechanical analyzer TMA (Thermo Plus manufactured by Rigaku Corporation) of a compression loading method / differential expansion method, with a constant load of 20 g applied to each test piece, it was heated from room temperature to 800°C at a heating rate of 10°C/min, and an amount of increase in length in the full-length direction of the ceramic honeycomb structure between room temperature and 800°C was measured. The obtained measurement value was used as an average coefficient of thermal expansion between room temperature and 800°C. The results are shown in Table 3.

### (h) Measurement of thermal shock fracture resistance coefficient R

The thermal shock fracture resistance coefficient R is determined from R = σ(1 - ν) / αE (where σ is the maximum bending stress, E is the Young's modulus, α is the coefficient of thermal expansion, and ν is the Poisson's ratio). The maximum bending stress σ and the Young's modulus E were measured according to JIS R1602-1995 "Testing methods for elastic modulus of fine ceramics" using an Instron universal testing machine with a maximum load of 5 kN on each test piece having a cross section of 10 mm × 10 mm and a length of 50 mm cut out from each silicon carbide-based ceramic honeycomb structure. That is, they were determined by a four-point bending test under the conditions of a distance between upper supports of 20 mm, a distance between lower supports of 40 mm, and a loading rate of 0.5 mm/min. The Poisson's ratio ν was determined by obtaining the proportion (mass %) of each element in the SiC particles and the binder phase (oxides) from element mapping by EPMA, and then calculating therefrom using the composite rule described in the section of "(1) Silicon carbide particles". The measured values of Poisson's ratio ν for Examples 1 to 6 and Comparative Examples 1 to 3 were all approximately 0.2. Using the maximum bending stress σ, the Poisson's ratio ν, the coefficient of thermal expansion α, and the Young's modulus E obtained by the above methods, a thermal shock fracture resistance coefficient R was obtained from the above equation. Furthermore, it is also expressed as a relative thermal shock fracture resistance coefficient R ratio relative to the R value of Comparative Example 2 taken as 1.00. These results are shown in Table 3.

**Table 1-1**

| Example No. | Raw Materials | | | |
|---|---|---|---|---|
| | Silicon Carbide Particles (aggregates) | Raw Material Powder for Binder Phase | | Silicon Carbide Particles + Raw Material Powder for Binder Phase |
| | D50 (µm) | D50 (µm) | Total Amount Relative to 100% by Mass of Aggregates (% by mass) | D50 (µm) |
| Ex. 1 | 29.3 | 6.8 | 17.4 | 24.8 |
| Ex. 2 | 29.3 | 6.8 | 17.4 | 24.8 |
| Ex. 3 | 29.3 | 6.8 | 17.4 | 24.8 |
| Ex. 4 | 30.2 | 6.6 | 17.4 | 25.9 |
| Ex. 5 | 32.9 | 6.8 | 17.1 | 28.2 |
| Ex. 6 | 30.2 | 6.6 | 17.4 | 25.9 |
| Com Ex. 1 | 38.4 | 11.8 | 25.0 | 32.9 |
| Com Ex.2 | 29.3 | 6.8 | 17.4 | 24.8 |
| Com Ex.3 | 29.3 | 6.8 | 17.4 | 24.8 |

**Table 1-2**

| Example No. | Sintering Conditions | | | | |
|---|---|---|---|---|---|
| | Atmosphere | First Keeping Step | | Second Keeping Step⁽¹⁾ | |
| | | Temperature (°C) | Time (hr) | Temperature (°C) | Time (hr) |
| Ex. 1 | Air | 1150 | 1.3 | 1300 | 0.83 |
| Ex. 2 | Air | 1110 | 1.3 | 1270 | 0.83 |
| Ex. 3 | Air | 1100 | 1.3 | 1250 | 0.83 |
| Ex. 4 | Air | 1150 | 0.5 | 1300 | 0.50 |
| Ex. 5 | Air | 1150 | 0.5 | 1300 | 0.50 |
| Ex. 6 | Air | 1150 | 3.0 | 1300 | 3.00 |
| Com Ex. 1 | Ar | 1450 | 5 | - | - |
| Com Ex.2 | Air | 1370 | 0.83 | - | - |
| Com Ex.3 | Air | 1230 | 0.83 | - | - |

| | | | | | |
|---|---|---|---|---|---|
| Note: (1) Comparative Examples 1 to 3 do not have a second keeping step. | | | | | |

**Table 2-1**

| Example No. | SiO₂ Layer on Aggregate Surface | | | | | |
|---|---|---|---|---|---|---|
| | Structure | | | Thickness | | |
| | Amorphous (% by mass) | Crystalline (% by mass) | Ratio of Amorphous/C rystalline | t₁(1) (µm) | t₂(2) (µm) | t₁/t₂ |
| Ex. 1 | 17.6 | 4.2 | 4.2 | 3.9 | 1.4 | 2.7 |
| Ex. 2 | 11.8 | 3.6 | 3.3 | 3.5 | 1.2 | 2.9 |
| Ex. 3 | 10.2 | 3.3 | 3.1 | 3.4 | 1.1 | 3.1 |
| Ex. 4 | 22.6 | 3.2 | 7.1 | 3.9 | 1.7 | 2.3 |
| Ex. 5 | 18.4 | 3.2 | 5.7 | 2.8 | 1.4 | 2.0 |
| Ex. 6 | 22.5 | 3.7 | 6.2 | 3.7 | 1.4 | 2.5 |
| Com Ex. 1 ⁽³⁾ | -⁽⁴⁾ | -⁽⁴⁾ | -⁽⁴⁾ | 3.1 | - | - |
| Com Ex.2 | 16.0 | 8.0 | 2.0 | 3.6 | 2.0 | 1.8 |
| Com Ex.3 | 7.0 | 1.7 | 4.1 | 2.2 | 0.7 | 3.0 |

| | | | | | | |
|---|---|---|---|---|---|---|
| Note: (1) t₁ is a thickness of the SiO₂ layer at portions where aggregates are bonded together without interposing a binder phase. (2) t₂ is a thickness of the SiO₂ layer at portions where aggregates are bonded together via a binder phase. (3) No binder phase. (4) Not measured. | | | | | | |

**Table 2-2**

| Example No. | Binder Phase | | | | |
|---|---|---|---|---|---|
| | Spinel Phase | | | Cordierite Phase | Cordierite Phase + Spinel Phase (% by mass) |
| | Amorphous (% by mass) | Crystalline (% by mass) | Ratio of Amorphous/ Crystalline | Molar Ratio M₁⁽¹⁾ | |
| Ex. 1 | 2.4 | 0.6 | 4.0 | 0.80 | 36.3 |
| Ex. 2 | 3.7 | 0.5 | 7.0 | 0.72 | 41.0 |
| Ex. 3 | 2.0 | 0.7 | 3.1 | 0.82 | 42.5 |
| Ex. 4 | 3.9 | 0.6 | 7.1 | 0.86 | 38.1 |
| Ex. 5 | 1.8 | 0.5 | 3.4 | 0.80 | 42.2 |
| Ex. 6 | 2.6 | 0.7 | 3.7 | 0.88 | 39.1 |
| Com Ex. 1 ⁽²⁾ | - | - | - | - | - |
| Com Ex.2 | 2.5 | 0.9 | 2.7 | 0.80 | 37.3 |
| Com Ex.3 | 8.5 | 0.7 | 12.0 | 0.09 | 32.7 |

| | | | | | |
|---|---|---|---|---|---|
| Note: (1) M₁ = number of moles of the cordierite phase / (number of moles of the cordierite phase + number of moles of the spinel phase). (2) No binder phase. | | | | | |

**Table 3**

| Example No. | Evaluation | | | | | | |
|---|---|---|---|---|---|---|---|
| | Porosity (%) | Median Pore Diameter (µm) | CTE⁽¹⁾ (×10⁻⁷/°C) | σ⁽²⁾ (MPa) | E⁽³⁾ (GPa) | R⁽⁴⁾ (°C) | R Ratio⁽⁵⁾ |
| Ex. 1 | 38.0 | 9.8 | 47.5 | 4.7 | 2.2 | 352 | 1.02 |
| Ex. 2 | 38.9 | 9.2 | 47.1 | 5.7 | 2.3 | 418 | 1.21 |
| Ex. 3 | 39.7 | 8.8 | 46.9 | 7.1 | 1.8 | 660 | 1.91 |
| Ex. 4 | 39.0 | 9.8 | 48.5 | 6.8 | 2.9 | 387 | 1.12 |
| Ex. 5 | 38.9 | 10.8 | 47.0 | 8.5 | 3.6 | 402 | 1.17 |
| Ex. 6 | 37.3 | 10.0 | 47.6 | 6.5 | 2.8 | 390 | 1.13 |
| Com Ex. 1 | 40.1 | 13.7 | 44.2 | 4.0 | 1.4 | 517 | 1.50 |
| Com Ex.2 | 35.6 | 9.4 | 51.3 | 5.7 | 2.6 | 345 | 1.00 |
| Com Ex.3 | 26.7 | 4.1 | 49.3 | 0.7 | 0.3 | 385 | 1.12 |

| | | | | | | | |
|---|---|---|---|---|---|---|---|
| Note: (1) CTE represents an average coefficient of thermal expansion between room temperature and 800°C. (2) σ represents a maximum bending stress. (3) E represents a Young's modulus. (4) R represents a thermal shock fracture resistance coefficient. (5) The R ratio is a thermal shock fracture resistance coefficient ratio expressed as a relative value relative to the thermal shock fracture resistance coefficient R of Comparative Example 2 taken as 1.00. | | | | | | | |

From Table 2-1, Table 2-2, and Table 3, the silicon carbide-based ceramic honeycomb structures of the present invention of Examples 1 to 6 had a low coefficient of thermal expansion and also had excellent thermal shock resistance and maximum bending stress, so it was found that they were excellent in the balance of low thermal expansion, thermal shock resistance, and strength. In contrast, the silicon carbide-based ceramic honeycomb structure of Comparative Example 1 had a small coefficient of thermal expansion because it did not have a binder phase, but had poor thermal shock resistance, and its maximum bending stress was also small. In addition, the silicon carbide-based ceramic honeycomb structure of Comparative Example 2 had a remarkably large coefficient of thermal expansion because the mass ratio of the amorphous SiO₂ phase to the crystalline SiO₂ phase in the SiO₂ layer was less than 3, and the mass ratio of the amorphous spinel phase to the crystalline spinel phase in the spinel phase was less than 3. Furthermore, the silicon carbide-based ceramic honeycomb structure of Comparative Example 3 had a large coefficient of thermal expansion because the molar ratio M₁ of the cordierite phase was less than 0.2, and its maximum bending stress was remarkably small. Thus, it was found that Comparative Examples 1 to 3 were inferior to Examples 1 to 6 in the balance of low thermal expansion, thermal shock resistance, and strength.

The silicon carbide-based ceramic honeycomb structure of the present invention does not require a non-oxidizing atmosphere during sintering and can keep the maximum temperature of sintering low. Therefore, it can be produced at lower cost than ever, has low thermal expansion and thermal shock resistance, and is also excellent in the balance between these and strength.

### DESCRIPTION OF REFERENCE NUMERALS

1: Aggregate
2: Binder phase
3: SiO₂ layer
4: Spinel phase
5: Cordierite phase
11, 21: Outer peripheral wall
12, 22, 32: Cell wall
13, 23, 33: Outlet-side-plugged flow path (First flow path)
14, 24, 34: Inlet-side-plugged flow path (Second flow path)
15a, 25a, 35a: Exhaust-gas-inlet-side end surface
15b, 25b, 35b: Exhaust-gas-outlet-side end surface
16a, 26a, 36a: Inlet-side plug
16b, 26b, 36b: Outlet-side plug
100, 200: Ceramic honeycomb filter
110: Ceramic honeycomb structure
210: Ceramic honeycomb segment assembly
211, 311: Honeycomb segment
t₁: Thickness of a SiO₂ layer at portions where aggregates are bonded together without interposing a binder phase
t₂: Thickness of a SiO₂ layer at portions where aggregates are bonded together via a binder phase

## Claims

1. A silicon carbide-based ceramic honeycomb structure comprising: porous cell walls defining a plurality of flow paths extending from a first end surface to a second end surface; and an outer peripheral wall,
wherein the cell walls comprise aggregates made of silicon carbide, a SiO₂ layer existing on a surface of the aggregates, and a binder phase including a cordierite phase and a spinel phase,
wherein there are portions in which the aggregates are bonded together by the SiO₂ layer without interposing the binder phase, and portions in which the aggregates are bonded together by the SiO₂ layer via the binder phase,
wherein the SiO₂ layer has an amorphous SiO₂ phase and a crystalline SiO₂ phase, and
wherein the silicon carbide-based ceramic honeycomb structure has a coefficient of thermal expansion (between room temperature and 800°C) of 49 × 10⁻⁷/°C or less.

2. The silicon carbide-based ceramic honeycomb structure according to claim 1, wherein the spinel phase has an amorphous spinel phase and a crystalline spinel phase.

3. The silicon carbide-based ceramic honeycomb structure according to claim 2, wherein a mass ratio of the amorphous spinel phase to the crystalline spinel phase in the spinel phase is 3 or more.

4. The silicon carbide-based ceramic honeycomb structure according to claim 1, wherein a mass ratio of the amorphous SiO₂ phase to the crystalline SiO₂ phase in the SiO₂ layer is 3 or more.

5. The silicon carbide-based ceramic honeycomb structure according to claim 1, wherein a ratio (t₁/t₂) of a thickness t₁ of the SiO₂ layer at the portions in which the aggregates are bonded together by the SiO₂ layer without interposing the binder phase to a thickness t₂ of the SiO₂ layer at the portions in which the aggregates are bonded together by the SiO₂ layer via the binder phase is greater than 1.

6. The silicon carbide-based ceramic honeycomb structure according to claim 1, wherein a molar ratio M₁ of the cordierite phase [= number of moles of the cordierite phase / (number of moles of the cordierite phase + number of moles of the spinel phase)] in the binder phase is 0.45 to 0.90.

7. The silicon carbide-based ceramic honeycomb structure according to claim 1, wherein a total content of the cordierite phase and the spinel phase in the binder phase is 35% by mass or more.

8. A silicon carbide-based ceramic honeycomb structure comprising: porous cell walls defining a plurality of flow paths extending from a first end surface to a second end surface; and an outer peripheral wall,
wherein the cell walls comprise aggregates made of silicon carbide, a SiO₂ layer existing on a surface of the aggregates, and a binder phase including a cordierite phase and a spinel phase,
wherein the spinel phase has an amorphous spinel phase and a crystalline spinel phase,
wherein a mass ratio of the amorphous spinel phase to the crystalline spinel phase in the spinel phase is 3 or more,
wherein there are portions in which the aggregates are bonded together by the SiO₂ layer without interposing the binder phase, and portions in which the aggregates are bonded together by the SiO₂ layer via the binder phase,
wherein the SiO₂ layer has an amorphous SiO₂ phase and a crystalline SiO₂ phase,
wherein a mass ratio of the amorphous SiO₂ phase to the crystalline SiO₂ phase in the SiO₂ layer is 3 or more,
wherein a molar ratio M₁ of the cordierite phase [= number of moles of the cordierite phase / (number of moles of the cordierite phase + number of moles of the spinel phase)] in the binder phase is 0.2 or more, and
wherein the silicon carbide-based ceramic honeycomb structure has a coefficient of thermal expansion (between room temperature and 800°C) of 49 × 10⁻⁷/°C or less.

9. The silicon carbide-based ceramic honeycomb structure according to claim 1, wherein the flow paths consist of first flow paths and second flow paths that are alternately arranged in a transverse direction, the first flow path being open at the first end surface and provided with plugs at the second end surface, and the second flow path being provided with plugs at the first end surface and open at the second end surface.

10. The silicon carbide-based ceramic honeycomb structure according to claim 1, wherein a cross-sectional area of the first flow path is larger than a cross-sectional area of the second flow path in a transverse cross section.

11. A ceramic honeycomb segment assembly comprising a plurality of honeycomb segments bonded to each other at their outer peripheral wall surfaces, wherein each of the honeycomb segments is made of the silicon carbide-based ceramic honeycomb structure according to any one of claims 1 to 9.
